# EUROPÄISCHE PATENTANMELDUNG

(11) **EP 0 569 684 A1**
(43) Veröffentlichungstag der Anmeldung: **18.11.1993**
(21) Anmeldenummer: 93104004.2
(22) Anmeldetag: 12.03.1993
(51) Int. Cl.: B65G 47/29, B65G 47/88

(54) **Transportvorrichtung**

(30) Priorität: 14.05.1992 DE 4215375
(71) Anmelder: HANDTMANN A-PUNKT AUTOMATION GMBH, D-88255 Baienfurt (DE)
(72) Erfinder: Willburger, Peter, Dipl.-Ing. (FH), D-88255 Baindt (DE); Putschler, Georg, Dipl.-Ing. (FH), D-88273 Fronreute (DE); Strasser, Karl-Heinz, D-88276 Berg b. Ravensburg (DE)
(74) Vertreter: Engelhardt, Guido, Dipl.-Ing.

(57) **Zusammenfassung**

Einer Vorrichtung (1) zur Zuführung von Transportbehältern (2) zu einer Belade- oder Entladestation mittels einer oder mehrerer antreibbarer Förderbänder (3, 4), mit denen die Transportbehälter (2) reibschlüssig koppelbar sind, ist ein parallel zu mindestens einem der Förderbänder (3, 4) verlaufender durch eine schrittweise antreibbare Kette (12) gebildeter Stelltrieb (11) zugeordnet, der einen oder mehrere mit den Transportbehältern (2) zusammenwirkende Anschläge (21) aufweist.

Durch diese Ausgestaltung ist es möglich, die Transportbehälter (2) in einer Belade- oder Entladestation äußerst exakt in einer vorgegebenen Position stillzusetzen. Die Transportbehälter (2) sind demnach sehr genau zu positionieren, auch kann deren Stillstandslage leicht verändert und an andere Stückgüter sowie Belade- und Entladevorrichtungen angepaßt werden.

## Beschreibung

Die Erfindung bezieht sich auf eine Vorrichtung zur Zuführung von Transportbehältern für Stückgüter, beispielsweise Würstchen oder ähnliche Waren, zu einer Belade- oder Entladestation mittels eines oder mehrerer antreibbarer Förderbänder, mit denen die Transportbehälter reibschlüssig koppelbar sind.

Transportvorrichtungen dieser Art sind in einer großen Anzahl unterschiedlicher Ausgestaltungen bekannt. Um die Stückgüter in die Transportbehälter einbringen oder aus diesen entnehmen zu können, sind hierbei die Förderbänder im Bereich einer Belade- und/oder Entladestation jeweils stillzusetzen. Da jedoch die Transportbehälter nicht formschlüssig mit den Förderbändern verbunden sind und somit auf diesen verschoben werden können und außerdem deren Antriebsglieder vielfach Schlupf aufweisen, ist ein exaktes Anhalten der Transportbehälter durch Abschalten des Antriebes an einer vorgesehenen Stelle schwerlich zu bewerkstelligen. Die Transportbehälter befinden sich demnach beim Beladen und Entladen oftmals nicht in der vorgegebenen Position, so daß das Einlegen der Stückgüter und deren Entnahme mit Hilfe anderer zugeordneter maschinell gesteuerter Vorrichtungen vielfach mit erheblichen Schwierigkeiten verbunden und diese Vorrichtungen mitunter nicht einsetzbar sind.

Aufgabe der Erfindung ist es daher, eine Vorrichtung zur Zuführung von Transportbehältern für Stückgüter zu schaffen, mittels der es auf sehr einfache Weise und ohne daß es besonderer Steuerelemente bedarf möglich ist, die Transportbehälter in einer Belade- oder Entladestation äußerst exakt in einer vorgegebenen den Belade- und Entladevorrichtungen zugeordneten Position stillzusetzen. Die Transportbehälter sollen demnach sehr genau zu positionieren sein, auch soll deren Stillstandslage leicht verändert und an andersartige Stückgüter sowie Belade- und Entladevorrichtungen angepaßt werden können. Der dazu erforderliche Bauaufwand soll gering gehalten werden, dennoch sollen eine einfache Handhabung und eine hohe Betriebssicherheit gegeben sein.

Die Vorrichtung zur Zuführung von Transportbehältern für Stückgüter, mittels der dies zu bewerkstelligen ist, ist dadurch gekennzeichnet, daß parallel zumindestens einem der Förderbänder ein vorzugsweise durch eine umlaufende schrittweise antreibbare Kette gebildeter Stelltrieb angeordnet ist, der einen oder mehrere mit den Transportbehältern zusammenwirkende Anschläge aufweist.

Zweckmäßig ist es hierbei, den Anschlag des Stelltriebes durch ein an zwei benachbarten Gelenkbolzen der Kette befestigtes Aufsatzstück zu bilden, das eine achssenkrecht zur Transportrichtung verlaufende Anschlagfläche aufweist, wobei das Aufsatzstück aus einem Winkelstück und einer Platte zusammengesetzt sein kann, die auf die seitlich überstehenden Gelenkbolzen der Kette aufsteckbar und miteinander verbindbar sind, und die Anschlagfläche an dem auf die Gelenkbolzen der Kette aufsteckbaren Schenkel des Winkelstückes vorgesehen sein sollte.

Angebracht ist es ferner, wenn die Transportbehälter jeweils einen mit dem Anschlag des Stelltriebes zusammenwirkenden Gegenanschlag aufweisen, der durch eine an der Unterseite der Transportbehälter angebrachte sich in Transportrichtung erstreckende Anschlagleiste gebildet sein sollte.

Nach einer Weiterbildung ist vorgesehen, um Transportbehälter in beiden Längsrichtungen der Förderbänder und somit auch entgegen deren Transportrichtung verstellen zu können, den Stelltrieb mit vor den Anschlägen an der Kette angebrachten von den Transportbehältern überfahrbaren Mitnehmern zu versehen, die jeweils eine mit den Transportbehältern zusammenwirkende Anlagefläche aufweisen.

Die Mitnehmer des Stelltriebes können in einfacher Ausgestaltung jeweils aus einem Winkelstück und einer Platte zusammengesetzt sein, die gemeinsam auf einem beiderseits über die Kette überstehenden Gelenkbolzen entgegen der Kraft einer an der Kette abgestützten Feder verschwenkbar gelagert sind.

Ferner sollte der die Kette des Stelltriebes übergreifende Schenkel des Winkelstückes eine in Transportrichtung geneigt verlaufende mit den Transportbehältern zusammenwirkende Schrägfläche aufweisen,und die Anlagefläche des Mitnehmers sollte an einem seitlich an diesem befestigten Ansatzstück vorgesehen sein, das in Fluchtrichtung des Anschlages des Stelltriebes angeordnet ist.

Wird der Abstand zwischen dem Anschlag des Stelltriebes und der Anlagefläche des Mitnehmers derart bemessen, daß dieser der Länge der an den Transportbehältern angebrachten Anschlagleisten entspricht, sind hierbei die Transportbehälter betriebssicher arretiert.

Angezeigt ist es des weiteren, den Stelltrieb durch einen vorzugsweise in beiden Drehrichtungen gesteuert umlaufenden Schrittmotor anzutreiben und in Transportrichtung kürzer zu bemessen ist als das diesem zugeordnete Förderband, so daß die Transportbehälter von selbst von dem Stelltrieb abgekoppelt werden.

Zur sicheren Beförderung von Transportbehältern sollten mindestens zwei mit seitlichem Abstand zueinander angeordnete Förderbänder vorgesehen und auf den Innenseiten der beiden äußeren Förderbänder sollte jeweils ein Stelltrieb angeordnet werden.

Wird eine Vorrichtung zur Zuführung von Transportbehältern für Stückgüter zu einer Belade- oder Entladestation gemäß der Erfindung ausgebildet, so ist es mit sehr einfachen Mitteln möglich, die Transportbehälter an einer vorgegebenen Stelle stillzusetzen, so daß die Vorrichtungen zur Einbringung und zur Entnahme der Stückgüter unter stets gleichen Voraussetzungen arbeiten können und durch ungenaue Positionierungen bedingte Betriebsstörungen weitgehend vermieden sind. Wird nämlich parallel zu einem der Förderbänder ein schrittweise antreibbarer Stelltrieb vorgesehen, der mindestens einen den Transportbehältern zugeordneten Anschlag aufweist, so ist es möglich, diese lagegenau anzuhalten, ohne daß dazu die Förderbänder stillgesetzt werden müssen. Mit Hilfe des Stelltriebes wird lediglich der Anschlag in eine vorgegebene Position gebracht, die Transportbehälter werden in dieser Position mit Hilfe des Anschlages gestoppt und so lange angehalten, bis z. B. der Belade- oder Entladevorgang beendet ist.

Auch kann die Lage der Transportbehälter ohne Schwierigkeiten mit Hilfe des Stelltriebes korrigiert oder verändert werden. Dazu ist der Stelltrieb lediglich in Transportrichtung der Förderbänder oder auch entgegengesetzt zu dieser anzutreiben, die Transportbehälter werden durch den Stelltrieb in entsprechender Weise verstellt. Die Antriebsmittel der Förderbänder sind hierbei nicht abzuschalten, diese gleiten lediglich an dem Boden der Transportbehälter entlang. Und sollen die Transportbehälter weiter bewegt werden, ist der Stelltrieb, von dem diese im Endbereich einer Station selbsttätig abgekoppelt werden, in Betrieb zu nehmen. Aufwendige Steuerelemente sind demnach, um dies zu bewerkstelligen, nicht erforderlich, vielmehr dienen dazu mechanische Mittel, die einfach in ihrer Handhabung und sehr betriebssicher und somit störunanfällig sind sowie auch bei rauhem Betrieb eine lange Lebensdauer aufweisen. Des weiteren können mehreren hintereinander angeordneten Stationen Transportbehälter mittels diesen gemeinsamer Förderbänder zugeführt werden, die Stationen können aber unabhängig voneinander in unterschiedlichen Arbeitstakten arbeiten.

In der Zeichnung ist ein Ausführungbeispiel der gemäß der Erfindung ausgebildeten Vorrichtung zur Zuführung von Transportbehältern für Stückgüter zu einer Belade- oder Entladestation dargestellt, das nachfolgend im einzelnen erläutert ist. Hierbei zeigt:
- Figur 1: die Transportvorrichtung in einer Seitenansicht mit einem stillgesetzten Transportbehälter sowie
- Figuren 2 und 3: einen Schnitt nach der Linie II - II bzw. der Linie III - III der Figur 1 in vergrosserten Darstellungen.

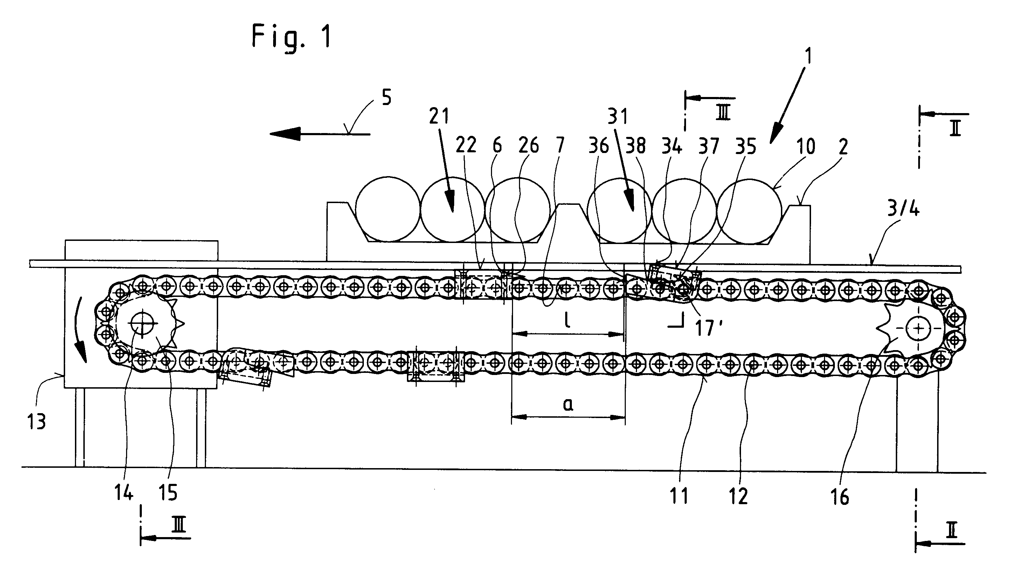

Die in Figur 1 dargestellte und mit 1 bezeichnete Vorrichtung dient zur Zuführung von Transportbehältern 2 zu einer Belade- oder Entladestation mittels zweier mit seitlichem Abstand zueinander angeordneter Förderbänder 3 und 4, mittels denen die Transportbehälter 2 reibschlüssig koppelbar sind. Damit die Transportbehälter 2 lagegenau stillgesetzt werden können, ist den Förderbändern 3 und 4 jeweils ein gesteuert antreibbarer Stelltrieb 11 bzw. 11' zugeordnet, die mit mit den Transportbehältern 2 zusammenwirkende Anschläge 21 ausgestattet sind.

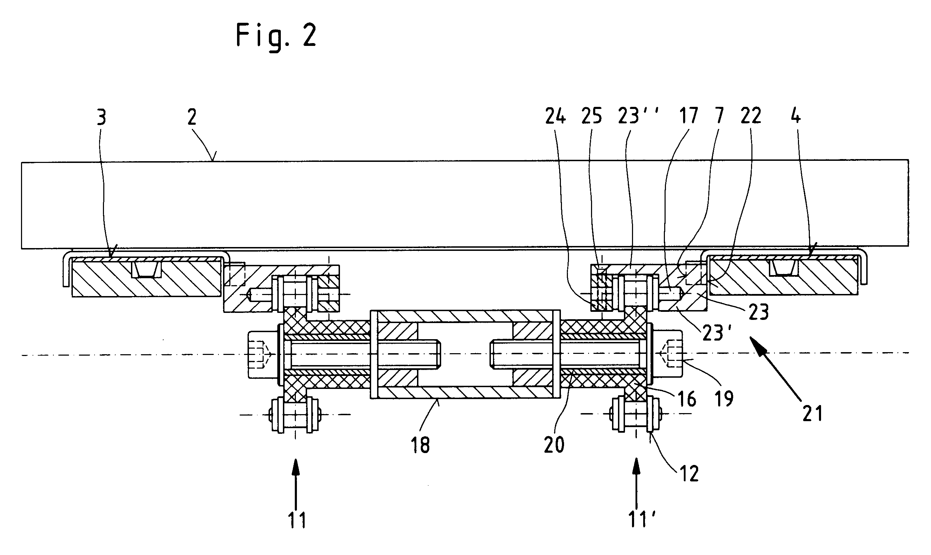

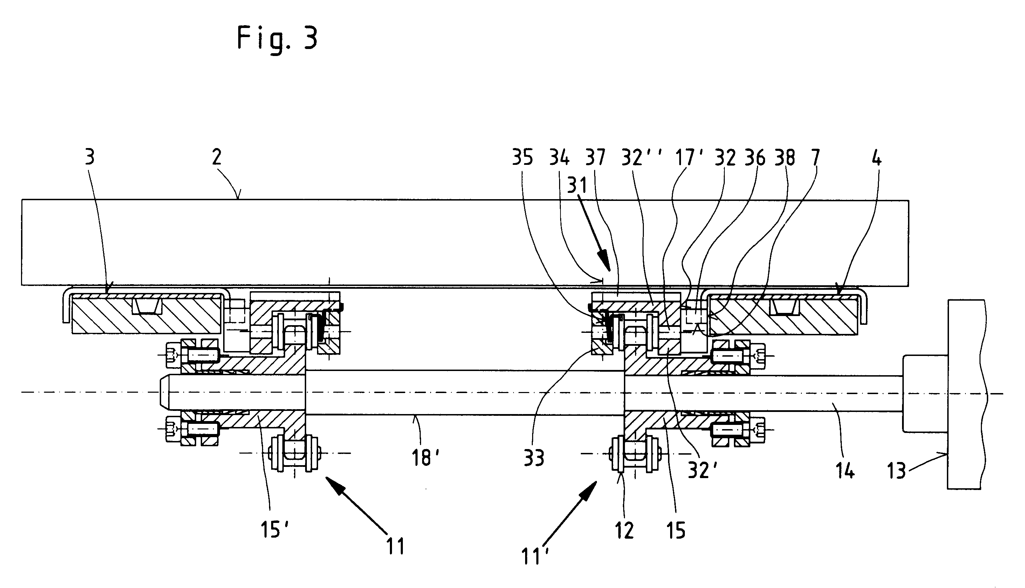

Die Stelltriebe 11 bzw. 11' bestehen hierbei, wie dies insbesondere den Figuren 2 und 3 zu entnehmen ist, aus über Kettenräder 15 und 16 geführte Ketten 12, die mittels eines Schrittmotors 13 antreibbar sind. Die Kettenräder 15 sind dazu auf der Abtriebswelle 14 des Schrittmotors 13 aufgespannt, die Kettenräder 16 sind dagegen mittels einer Hülse 20 drehbar auf Bolzen 19, die an einem Distanzstück 18 gehalten sind, gelagert. Auch zwischen den Kettenrädern 15 ist ein Distanzstück 18' vorgesehen.

Die mit den Transportbehältern 2 zusammenwirkenden Anschläge sind jeweils aus einem Aufsatzstück 22 gebildet, das aus einem Winkelstück 23 und einer Platte 24 zusammengesetzt ist. Das Winkelstück 23 wie auch die Platte 24 sind auf zwei benachbarten nach außen verlängerten Gelenkbolzen 17 der Kette 12 aufgesteckt und durch Schrauben 25 fest miteinander verbunden. Die Gelenkbolzen 17 greifen hierbei in den Schenkel 23' des Winkelstückes 23 ein und an dem die Kette 12 übergreifenden Schenkel 23'' ist die Platte 24 angeschraubt. Des weiteren ist an dem Schenkel 23' des Winkelstückes 23 eine senkrecht zu der durch den Pfeil 5 gekennzeichneten Transportrichtung verlaufende Anschlagfläche 26 vorgesehen.

Mit den Anschlägen 21 der Stelltriebe 11, 11' wirken an den Transportbehältern 2 vorgesehene Gegenanschläge 6 zusammen. Diese sind jeweils durch eine sich in Transportrichtung erstreckende Anschlagleiste 7 gebildet.

Des weiteren sind die Stelltriebe 11, 11' mit Mitnehmern 31 ausgestattet, die ebenfalls an den Ketten 12 angebracht und von den Transportbehältern 2 überfahrbar sind. Die Mitnehmer 31 weisen hierbei eine mit den Transportbehältern 2 zusammenwirkende Anlagefläche 36 auf, die in Fluchtrichtung zu den Anschlagflächen 26 der Anschläge 21 angeordnet sind. Der Abstand a zwischen einer Anschlagfläche 26 und einer Anlagefläche 36 ist hierbei geringfügig länger bemessen als die Länge 1 der Anschlagleiste 7 der Transportbehälter 2, so daß diese zwischen den Anschlägen 21 und den Mitnehmern 31 arretierbar sind.

Die Mitnehmer 31 bestehen ebenfalls aus einem Winkelstück 32 und einer Platte 33, die durch Schrauben 34 miteinander verbunden sind. Die Winkelstücke 32 sind hierbei verschwenkbar auf einem seitlich überstehenden Gelenkbolzen 17' der Kette 12 gelagert, der in den Schenkel 32' des Winkelstückes 32 sowie die Platte 33 eingreift. An dem anderen Schenkel 32'' des Winkelstückes 32 ist ferner eine Schrägfläche 37 vorgesehen, die mit der Unterseite der Transportbehälter 2 zusammenwirkt.

Durch eine Feder 35, die an der Kette 12 sowie dem Schenkel 32'' des Winkelstückes 32 abgestützt ist, werden die Mitnehmer 31 in der in Figur 1 dargestellten Lage nach dem Überfahren durch einen Transportbehälter 2 zurückgeführt, so daß die an einem seitlich angeschraubten Ansatzstück 38 vorgesehene Anlagefläche 36 mit dem durch den Anschlag 21 gestoppten Transportbehälter zusammenwirken kann. Mit Hilfe der Mitnehmer 31 können die Transportbehälter 2 somit in der durch den Pfeil 5 gekennzeichneten Transportrichtung verschoben werden, mit Hilfe der Anschläge 21 dagegen in entgegengesetzter Richtung, und zwar jeweils unabhängig von der Geschwindigkeit der Förderbänder 3 und 4.

Die in die Transportbehälter 2 eingelegten Würste 10 sollen bei dem gezeigten Ausführungsbeispiel an einer vorgegebenen Stelle von einer nicht dargestellten Vorrichtung übernommen und weiterbefördert werden. Mit Hilfe der Stelltriebe 11, 11' bzw. der an diesen angebrachten Anschläge 21 können die Transportbehälter 2 exakt positioniert werden, um eine störungsfreie Aufnahme der Würste 10 zu gewährleisten. Dazu sind lediglich die Anschläge 21 in eine entsprechende Position zu verfahren und die Stelltriebe 11, 11' sind stillzusetzen. Ein von den Förderbändern 3, 4 zugeführter Transportbehälter 2 wird durch zwei einander gegenüberliegend angeordnete Anschläge 21 abgestoppt, so daß das Entladen an der vorgesehenen Stelle erfolgen kann. Die Förderbänder 3, 4 laufen dabei weiter um.

Der Mitnehmer 31, der zuvor von dem Transportbehälter 2 überfahren wurde, liegt hierbei mit der Anlagefläche 36 an der Rückseite des Transportbehälters 2 an, so daß der Transportbehälter 2 arretiert ist und bei einer Inbetriebnahme der Stelltriebe 11, 11' durch die Mitnehmer 31 weitergeführt wird. Im Bereich des Kettenrades 15 wird jedoch die Kette 12 und mit dieser sowohl die Anschläge 21 als auch die Mitnehmer 31 von dem Transportbehälter 2 weggeführt, so daß dessen Verbindung mit den Stelltrieben 11, 11' selbsttätig gelöst und zum Weitertransport ausschließlich die Förderbänder 3, 4 dienen.

ein zwischen den Anschlägen 21 und den diesen vorgeschalteten Mitnehmer 31 angeordneter Transportbehälter ist somit beim Beladen und auch beim Entladen nicht nur arretiert, sondern kann auch mit Hilfe der Stelltriebe 11, 11' unabhängig von den Transportbändern 3, 4 in beiden Längsrichtungen verstellt werden. Ein exaktes Ausrichten der Transportbehälter 2 ist somit ohne Schwierigkeiten zu bewerkstelligen.

## Patentansprüche

1. Vorrichtung (1) zur Zuführung von Transportbehältern (2) für Stückgüter, beispielsweise Würstchen (10) oder ähnliche Waren, zu einer Belade- oder Entladestation mittels eines oder mehrerer antreibbarer Förderbänder (3, 4), mit denen die Transportbehälter (2) reibschlüssig koppelbar sind,
**dadurch gekennzeichnet,**
daß parallel zumindestens einem der Förderbänder (3, 4) ein vorzugsweise durch eine umlaufende schrittweise antreibbare Kette (12) gebildeter Stelltrieb (11, 11') angeordnet ist, der einen oder mehrere mit den Transportbehältern (2) zusammenwirkende Anschläge (21) aufweist.

2. Vorrichtung nach Anspruch 1,
**dadurch gekennzeichnet,**
daß der Anschlag (21) des Stelltriebes (11) durch ein an zwei benachbarten Gelenkbolzen (17) der Kette (12) befestigtes Aufsatzstück (22) gebildet ist, das eine achssenkrecht zur Transportrichtung (Pfeil 5) verlaufende Anschlagfläche (26) aufweist.

3. Vorrichtung nach Anspruch 2,
**dadurch gekennzeichnet,**
daß das Aufsatzstück (22) aus einem Winkelstück (23) und einer Platte (24) zusammengesetzt ist, die auf die seitlich überstehenden Gelenkbolzen (17) der Kette (12) aufsteckbar und miteinander verbindbar sind.

4. Vorrichtung nach Anspruch 2 oder 3,
**dadurch gekennzeichnet,**
daß die Anschlagfläche (26) des Aufsatzstückes (22) an dem auf die Gelenkbolzen (17) der Kette (12) aufsteckbaren Schenkel (23') des Winkelstückes (23) vorgesehen ist.

5. Vorrichtung nach einem oder mehreren der Ansprüche 1 bis 4,
**dadurch gekennzeichnet,**
daß die Transportbehälter (2) jeweils einen mit dem Anschlag (21) des Stelltriebes (11) zusammenwirkenden Gegenanschlag (6) aufweisen.

6. Vorrichtung nach Anspruch 5,
**dadurch gekennzeichnet,**
daß der Gegenanschlag (6) eines Transportbehälters (2) durch eine an dessen Unterseite angebrachte sich in Transportrichtung (Pfeil 5) erstreckende Anschlagleiste (7) gebildet ist.

7. Vorrichtung nach einem oder mehreren der Ansprüche 1 bis 6,
**dadurch gekennzeichnet,**
daß der Stelltrieb (11) mit vor den Anschlägen (21) an der Kette (12) angebrachten von den Transportbehältern (2) überfahrbaren Mitnehmern (31) versehen ist, die jeweils eine mit den Transportbehältern (2) zusammenwirkende Anlagefläche (36) aufweisen.

8. Vorrichtung nach Anspruch 7,
**dadurch gekennzeichnet,**
daß die Mitnehmer (31) des Stelltriebes (11) jeweils aus einem Winkelstück (32) und einer Platte (33) zusammengesetzt sind, die gemeinsam auf einem beiderseits über die Kette (12) überstehenden Gelenkbolzen (17') entgegen der Kraft einer an der Kette (12) abgestützten Feder (35) verschwenkbar gelagert sind.

9. Vorrichtung nach Anspruch 7 oder 8,
**dadurch gekennzeichnet,**
daß der die Kette (12) des Stelltriebes (11) übergreifende Schenkel (32') des Winkelstückes (32) eine in Transportrichtung (Pfeil 5) geneigt verlaufende mit den Transportbehältern (2) zusammenwirkende Schrägfläche (37) aufweist.

10. Vorrichtung nach einem oder mehreren der Ansprüche 7 bis 9,
**dadurch gekennzeichnet,**
daß die Anlagefläche (36) des Mitnehmers (31) an einem seitlich an diesem befestigten Ansatzstück (38) vorgesehen ist, das in Fluchtrichtung des Anschlages (21) des Stelltriebes (11) angeordnet ist.

11. Vorrichtung nach einem oder mehreren der Ansprüche 7 bis 10,
**dadurch gekennzeichnet,**
daß der Abstand (a) zwischen dem Anschlag (21) des Stelltriebes (11) und der Anlagefläche (36) des Mitnehmers (31) der Länge (1) der an den Transportbehältern (2) angebrachten Anschlagleisten (7) entspricht.

12. Vorrichtung nach einem oder mehreren der Ansprüche 1 bis 11,
**dadurch gekennzeichnet,**
daß der Stelltrieb (11) durch einen vorzugsweise in beiden Drehrichtungen gesteuert umlaufenden Schrittmotor (13) antreibbar ist.

13. Vorrichtung nach einem oder mehreren der Ansprüche 1 bis 12,
**dadurch gekennzeichnet,**
daß der Stelltrieb (11) in Transportrichtung (Pfeil 5) kürzer bemessen ist als das diesem zugeordnete Förderband (3, 4).

14. Vorrichtung nach einem oder mehreren der Ansprüche 1 bis 13,
**dadurch gekennzeichnet,**
daß zum Befördern der Transportbehälter (2) mindestens zwei mit seitlichem Abstand zueinander angeordnete Förderbänder (3, 4) vorgesehen sind und daß auf den Innenseiten der beiden äußeren Förderbänder (3, 4) jeweils ein Stelltrieb (11, 11') angeordnet ist.
